# EUROPÄISCHE PATENTSCHRIFT

(11) **EP 3 560 323 B1**
(45) Veröffentlichungstag und Bekanntmachung des Hinweises auf die Patenterteilung: **16.11.2022**
(21) Anmeldenummer: 19169261.5
(22) Anmeldetag: 15.04.2019
(51) Int. Cl.: A01F 15/08

(54) **LANDWIRTSCHAFTLICHE RUNDBALLENPRESSE UND VERFAHREN ZUM BETRIEB EINER LANDWIRTSCHAFTLICHEN RUNDBALLENPRESSE**
AGRICULTURAL BALER AND METHOD FOR OPERATING SAME
PRESSE À BALLES RONDES ET PROCÉDÉ DE FONCTIONNEMENT D'UNE PRESSE À BALLES RONDES

(30) Priorität: 26.04.2018 DE 102018206518
(43) Veröffentlichungstag der Anmeldung: 30.10.2019
(73) Patentinhaber: Deere & Company, Moline, IL 61265 (US)
(72) Erfinder: Gresset, Pascal, 68163 Mannheim (DE); Perrotin, Frederic, 68163 Mannheim (DE)
(74) Vertreter: Stein, Stefan

(56) Entgegenhaltungen:
- EP-A1- 1 446 998
- EP-A1- 3 235 368
- WO-A1-2014/129890
- US-A1- 2015 257 340

## Beschreibung

Die Erfindung betrifft eine landwirtschaftliche Rundballenpresse gemäss dem Oberbegriff des unabhängigen Anspruchs 1 und ein Verfahren zum Betrieb einer landwirtschaftlichen Rundballenpresse gemäss dem Oberbegriff des unabhängigen Anspruchs 5.

Landwirtschaftliche Rundballenpressen sind bekannt. Dabei wird in Rundballenpressen landwirtschaftliches Erntegut, beispielsweise Stroh, Gras oder Getreide zu einem Rundballen geformt und mit einem Umwicklungsmaterial, beispielsweise Netz, Folie oder Bindegarn, umwickelt. Derartige Rundballenpressen weisen eine Aufnahme- und Zuführeinrichtung für das zu pressende Erntegut auf, durch welche das Erntegut in eine Zuführöffnung einer Ballenpresskammer eingeführt wird. Die Rundballenpresse umfasst ein Gehäuse, wobei das Gehäuse insbesondere zweigeteilt ausgebildet sein kann. Das Gehäuse kann ausserdem auf einem Fahrgestell angeordnet sein. Das Gehäuse weist einen Gehäuseteil, insbesondere einen fahrgestellfesten Gehäuseteil, und eine an diesem Gehäuseteil um eine Lagerachse aufschwenkbar, gelagerte Auswurfklappe auf. Im Speziellen befindet sich am rückwärtigen oberen Eckbereich des Gehäuseteils ein Lager, an welchem die Auswurfklappe schwenkbar gelagert sein kann.

Die Ballenpresskammer umfasst eines oder mehrere Pressmittel, die auf oder an dem Gehäuseteil und der Auswurfklappe verteilt sind und die Ballenpresskammer umfangsseitig begrenzen. Somit bildet das Gehäuseteil einen vorderen Teil der Ballenpresskammer und die Auswurfklappe einen hinteren Teil der Ballenpresskammer aus. Mittels des Pressmittels ist eine rotationserzeugende oder rotationserhaltende Eingriffswirkung auf einen in der Ballenpresskammer befindlichen Rundballen erzeugbar. Die Auswurfklappe ist mittels einer Stelleinrichtung derart schwenkbar, dass beim Öffnen der Auswurfklappe eine Auswurföffnung zwischen dem Gehäuseteil und der Auswurfklappe ausbildbar ist. Darüber hinaus ist mittels der Stelleinrichtung eine Abmessung der Auswurföffnung veränderbar, bevorzugt einstellbar.

Am Anfang eines Entladevorgangs, also nach dem Ende eines Pressvorgangs, erfolgt das Öffnen der Auswurföffnung, also bevorzugt, wenn der Rundballen fertig gepresst ist, die erforderliche Grösse erreicht hat und entladen werden kann. Während des Entladevorgangs wird die Abmessung der Auswurföffnung und die Anordnung der Pressmittel, also eine Geometrie der Ballenpresskammer, derart verändert, dass der Rundballen entladen werden kann. Dabei kann insbesondere auch die Geometrie zwischen den unmittelbar an der Auswurföffnung befindlichen Pressmitteln verändert werden, um den Rundballen zu entladen.

Ein wesentliches Problem beim Entladevorgang ist das sichere Entladen des Rundballens, in unebenem und/oder hügeligem Gelände, da der Rundballen in diesem Gelände nach dem Entladen weiterrollen und somit nicht am aktuellen Arbeitsort entladen werden kann. Aus diesem Grund muss der Bediener der Rundballenpresse in unebenem und/oder hügeligem Gelände das Sammeln des Ernteguts am aktuellen Arbeitsort zunächst unterbrechen, einen geeigneten Lagerort suchen, insbesondere ein flaches Gelände, den geeigneten Lagerort anfahren und dort den Rundballen entladen, um anschliessend wieder an den aktuellen Arbeitsort zurückzukehren. Dieser Vorgang ist sehr zeitaufwändig und mit erheblichem Aufwand verbunden. Im Weiteren ist die bekannte Rundballenpresse konstruktiv und verfahrenstechnisch nicht dazu ausgelegt einen Entladevorgang in unebenem und/oder hügeligem Gelände zu ermöglichen. Darüber hinaus erhöht ein Öffnen der Auswurfklappe während des Entladevorgangs, insbesondere ein automatisches Öffnen der Auswurfklappe, in unebenem und/oder hügeligem Gelände die Unfallgefahr, da der Rundballen ungewollt weiterrollen kann. Die US 2015/ 0257340 A1 offenbart ein System zur Kontrolle eines Entladevorgangs einer Auswurfklappe. Die EP 1 446 998 A1 offenbart eine Vorrichtung zum Unterstützen des Austritts eines Rundballens aus einer Ballenpresskammer bei einem Entladevorgang.

Ausgehend von diesem Stand der Technik ist es daher eine Aufgabe der vorliegenden Erfindung eine Rundballenpresse und ein Verfahren zum Betrieb einer Rundballenpresse vorzuschlagen, die die aus dem Stand der Technik bekannten Nachteile weitgehend vermeiden, insbesondere eine Rundballenpresse und ein Verfahren zum Betrieb einer Rundballenpresse vorzuschlagen, die konstruktiv und verfahrenstechnisch einfach ausgestaltet sind und/oder ein einfaches, unfallfreies und/oder weniger zeitaufwändiges Entladen des Rundballens, insbesondere in unebenem und/oder hügeligem Gelände ermöglichen.

Diese Aufgabe wird durch eine landwirtschaftliche Rundballenpresse mit den Merkmalen des Anspruchs 1 und ein Verfahren zum Betrieb einer landwirtschaftlichen Rundballenpresse mit den Merkmalen des Anspruchs 5 gelöst.

Die abhängigen Ansprüche beziehen sich auf besonders vorteilhafte Ausführungsformen der Erfindung.

Erfindungsgemäß ist die Auswurfklappe einer landwirtschaftlichen Rundballenpresse der eingangs genannten Art während eines Entladevorgangs des fertig gepressten Rundballen mittels der Stelleinrichtung derart einstellbar, dass die geöffnete Auswurfklappe von einer Entladeposition, in welcher der fertig gepresste Rundballen durch die Auswurföffnung entladen wird, in eine Halteposition beweglich ist, in welcher der entladene Rundballen mittels der geöffneten Auswurfklappe gehalten wird, und von der Halteposition in eine Entlastungsposition beweglich ist, in welcher der gehaltene Rundballen von der geöffneten Auswurfklappe losgelassen wird.

Wesentlich für die Erfindung ist die spezielle Ausbildung und Einstellbarkeit der Auswurfklappe während des Entladevorgangs. Diese bewirkt, dass der fertig gepresste und durch die Auswurföffnung in der Entladeposition entladene Rundballen mittels der geöffneten Auswurfklappe in der Halteposition in unebenem und/oder hügeligem Gelände haltbar ist. Der Rundballen kann dabei solange mittels der geöffneten Auswurfklappe in der Halteposition haltbar sein, bis der Rundballen keinerlei translatorische oder kinetische Energie mehr aufweist und in unebenem und/oder hügeligem Gelände abstellbar, insbesondere lagerbar ist. Anschliessend ist der Rundballen von der Halteposition in eine Entlastungsposition beweglich, in welcher der gehaltene und ruhende Rundballen von der geöffneten Auswurfklappe losgelassen wird. Vorteilhafterweise kann der Rundballen somit auf einfache Art und Weise gehalten und sicher am gewünschten Lagerort in unebenem und/oder hügeligem Gelände abgeladen werden. Ein unbeabsichtigtes Rollen des Rundballens nach dem Entladen kann also verhindert werden, sodass die Unfallgefahr reduziert wird. Damit kann der Rundballen ohne aufwändiges Unterbrechen des Sammelvorgangs, also ohne Zeitverlust, direkt am Arbeitsort in unebenem und/oder hügeligem Gelände abgeladen werden. Mit anderen Worten, die Standzeit der Rundballenpresse wird deutlich verkürzt und der Entladevorgang wird wenig aufwändig ausgestaltet. Es können also mehr Rundballen pro Zeiteinheit eingefahren werden.

Die Rundballenpresse kann eine größenunveränderliche Ballenpresskammer umfassen. Hierbei kann das Pressmittel als Pressrolle ausgebildet sein, insbesondere eine Vielzahl zueinander parallel verlaufender Pressrollen zum Pressen des Ernteguts. Die Rotationsachsen der Pressrollen können bei geschlossener Auswurfklappe auf einem Kreisbogen liegen und wenigstens eine der Pressrollen kann angetrieben sein. Die Anordnung der Pressrollen im Ballenpressraum kann einer Zylinderform entsprechen, sodass die Pressrollen zylindrisch um den Rundballen angeordnet sind und eine zylindrische Umfangsfläche ausbilden. Alternativ kann die Rundballenpresse auch mit einer größenveränderlichen Ballenpresskammer bzw. als Rundballenpresse mit variabler Ballenpresskammer ausgebildet sein, wobei die Pressmittel dann als Riemen, Gurte oder Kettenanordnungen ausgebildet sein können.

Der Entladevorgang kann mit dem Öffnen der Auswurfklappe beginnen und mit dem Schliessen der Auswurfklappe, nach dem Entladen und Halten des fertig gepressten Rundballens, enden. Die Auswurfklappe kann während des Entladevorgangs mittels der Stelleinrichtung zwischen der Entladeposition, der Halteposition und der Entlastungsposition beweglich sein, wobei die Auswurfklappe insbesondere von der Entladeposition in die Halteposition und anschliessend in die Entlastungsposition beweglich ist. Die Stelleinrichtung kann dabei als Stellmotor ausgebildet sein.

In Ausgestaltung der Erfindung ist die Auswurfklappe mittels der Stelleinrichtung derart einstellbar, dass die Abmessung der Auswurföffnung in der Halteposition kleiner ist als in der Entladeposition und die Abmessung der Auswurföffnung in der Entlastungsposition grösser ist als die Abmessung in der Halteposition. Die Abmessung der Auswurföffnung kann ein Durchmesser der Auswurföffnung oder ein Abstand zwischen dem Gehäuseteil und der Auswurfklappe sein, zwischen welchen die Auswurföffnung ausbildbar ist.

Da in der Entladeposition der fertig gepresste Rundballen durch die Auswurföffnung entladbar sein soll, kann in dieser Position die Abmessung der Auswurföffnung grösser als ein Rundballendurchmesser des fertig gepressten Rundballens sein. In der Halteposition kann die Abmessung der Auswurföffnung kleiner als der Rundballendurchmesser sein, da in der Halteposition der fertig gepresste und entladene Rundballen von der geöffneten Auswurfklappe gehalten wird. In der Entlastungsposition wiederum kann die Abmessung der Auswurföffnung grösser als der Rundballendurchmesser sein, da der gehaltene Rundballen von der geöffneten Auswurfklappe losgelassen wird. Die Abmessung der Auswurföffnung kann in der Entlastungsposition wenigstens der Abmessung in der Entladeposition entsprechen. Die Entladeposition kann aber auch eine maximale Abmessung und/oder in der Entlastungsposition eine kleiner Abmessung als in der Entladeposition aufweisen.

Mit anderen Worten, die Auswurfklappe ist während eines Entladevorgangs des fertig gepressten Rundballen mittels der Stelleinrichtung derart einstellbar, dass die Abmessung der Auswurföffnung zum Entladen eines fertig gepressten Rundballens zunächst vergrößert wird (Entladeposition), die Abmessung anschliessend zum Halten des entladenen Rundballens mit der geöffneten Auswurfklappe verkleinert wird (Halteposition), und die Abmessung danach zum Loslassen des Rundballens wieder vergrössert wird (Entlastungsposition). Vorteilhafterweise wird somit das sichere Entladen des Rundballens beim Entladevorgang in unebenem und/oder hügeligem Gelände ermöglicht. Es wird verhindert, dass der entladene Rundballen Entladevorgang in unebenem und/oder hügeligem Gelände nach dem Entladen weiterrollen und/oder umfallen kann und ein Entladen am aktuellen Arbeitsort ermöglicht wird. Der Bediener der Rundballenpresse muss also das Sammeln des landwirtschaftlichen Ernteguts am aktuellen Arbeitsort in unebenem und/oder hügeligem Gelände nicht unterbrechen. Der Zeitaufwand des Entladevorgangs und darüber hinaus die Unfallgefahr während des Entladevorgangs in unebenem und/oder hügeligem Gelände wird reduziert.

In Ausgestaltung der Erfindung umfasst die Auswurfklappe und/oder das Gehäuseteil unmittelbar an der Auswurföffnung eine frei drehbar gelagerte Halterolle zum Halten des Rundballens. Die Halterolle kann an der Auswurfklappe und/oder dem Gehäuseteil unmittelbar an der Auswurföffnung angeordnet und/oder befestigt sein. Aufgrund dieser Maßnahme hält bei geöffneter Auswurfklappe, insbesondere in der Halteposition, die frei drehbar gelagerte Halterolle den aus der Ballenpresskammer entladenen Rundballen. Der entladene Rundballen kann aber auch mittels der Halterolle an der Auswurfklappe entlanggleiten und gleichzeitig gehalten werden. Die Abmessung der Auswurfklappe in der Halteposition kann dabei unterschiedlich sein, insbesondere kann sich die Abmessung während der Halteposition, beispielsweise von einem zeitlichen Start der Halteposition bis zu einem zeitlichen Ende der Halteposition, vergrössern. Somit kann vorteilhafterweise auf zusätzliche Mittel zum Halten des Rundballens, beispielsweise eine aussen an der Auswurfklappe angeordnete Stützrolle, verzichtet werden.

In Ausgestaltung der Erfindung weist die Rundballenpresse einen Neigungssensor zur Messung einer Neigung der Rundballenpresse und/oder ein Kommunikationsmodul zum Empfang einer Standortinformation der Rundballenpresse auf. Ausserdem ist die Stelleinrichtung in Abhängigkeit von der Neigung und/oder der Standortinformation der Rundballenpresse betreibbar. Mit dem Neigungssensor kann die Neigung gemessen werden, insbesondere ein Neigungswinkel der Rundballenpresse in Bezug zur Lotrichtung oder eine Änderung eines Neigungswinkels und/oder der Neigungswinkel in Bezug zur Gravitation der Erde. Die Standortinformation der Rundballenpresse kann die eigene Position der Rundballenpresse auf der Erdoberfläche oder in einem geeigneten geometrischen Bezugssystem sein. Die Standortinformation kann beispielsweise mittels des globalen Positionsbestimmungssystem (engl. Global Positioning System=GPS) ermittelt werden und mittels des Kommunikationsmoduls bereitgestellt bzw. empfangen werden. Das Kommunikationsmodul kann ein GPS-Gerät und/oder ein WLAN-Gerät und/oder ein Tablet und/oder Smartphone sein. Die Neigung und/oder die Standortinformation geben Auskunft darüber, ob sich die Rundballenpresse, insbesondere der aktuelle Arbeitsort der Rundballenpresse, in unebenem und/oder hügeligem Gelände befindet. Vorteilhafterweise kann somit die Stelleinrichtung in Abhängigkeit von der Neigung und/oder der Standortinformation der Rundballenpresse, also in Abhängigkeit vom aktuellen Arbeitsort, betrieben werden. Darüber hinaus können die Entladeposition und/oder die Halteposition und/oder die Entlastungsposition in Abhängigkeit von der Neigung und/oder der Standortinformation der Rundballenpresse eingestellt werden. In beiden Fällen kann ein sicheres Entladen des Rundballens in unebenem und/oder hügeligem Gelände gewährleistet werden, was konstruktiv auf einfache Art und Weise durch das Vorsehen eines Neigungssensors und/oder Kommunikationsmoduls gelöst wird.

Die Erfindung betrifft weiter ein Verfahren zum Betrieb einer landwirtschaftlichen Rundballenpresse mit einem Gehäuse, insbesondere ein Entladeverfahren für eine Rundballenpresse. Das Gehäuse weist einen Gehäuseteil und eine an diesem Gehäuseteil um eine Lagerachse schwenkbar gelagerte Auswurfklappe auf. Die Rundballenpresse umfasst weiter auf dem Gehäuseteil und der Auswurfklappe verteilte angetriebene Pressmittel, die eine Ballenpresskammer umfangsseitig begrenzen und durch welche eine rotationserzeugende oder rotationserhaltene Eingriffswirkung auf einen in der Ballenpresskammer befindlichen Rundballen erzeugt wird. Die Auswurfklappe wird mittels einer Stelleinrichtung derart geschwenkt, dass beim Öffnen der Auswurfklappe eine Auswurföffnung zwischen dem Gehäuseteil und der Auswurfklappe ausgebildet wird und eine Abmessung der Auswurföffnung verändert, insbesondere eingestellt, wird. Dabei wird die Auswurfklappe während eines Entladevorgangs des fertig gepressten Rundballen mittels der Stelleinrichtung derart eingestellt, dass die geöffnete Auswurfklappe von einer Entladeposition, in welcher der fertig gepresste Rundballen durch die Auswurföffnung entladen wird, in eine Halteposition bewegt wird, in welcher der entladene Rundballen mittels der geöffneten Auswurfklappe gehalten wird, und von der Halteposition in eine Entlastungsposition bewegt wird, in welcher der gehaltene Rundballen von der geöffneten Auswurfklappe losgelassen wird.

Das erfindungsgemässe Verfahren weist die oben beschriebenen Vorteile der erfindungsgemässen Rundballenpresse auf. Im Weiteren kann die erfindungsgemässe Rundballenpresse bei der Durchführung des erfindungsgemässen Verfahrens verwendet werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Seitenansicht eines ersten Ausführungsbeispiel einer erfindungsgemässen landwirtschaftlichen Rundballenpresse mit Pressrollen und Auswurföffnung zum Entladen eines gepressten Rundballens, und
- Fig. 2: eine schematische Seitenansicht des ersten Ausführungsbeispiel der erfindungsgemässen landwirtschaftlichen Rundballenpresse in einer Entladeposition, und
- Fig. 3: eine schematische Seitenansicht des ersten Ausführungsbeispiel der erfindungsgemässen landwirtschaftlichen Rundballenpresse in einer Halteposition, und
- Fig. 4: eine schematische Seitenansicht des ersten Ausführungsbeispiel der erfindungsgemässen landwirtschaftlichen Rundballenpresse in einer Entlastungsposition, und
- Fig. 5: eine schematische Seitenansicht eines zweiten Ausführungsbeispiel der erfindungsgemässen landwirtschaftlichen Rundballenpresse.

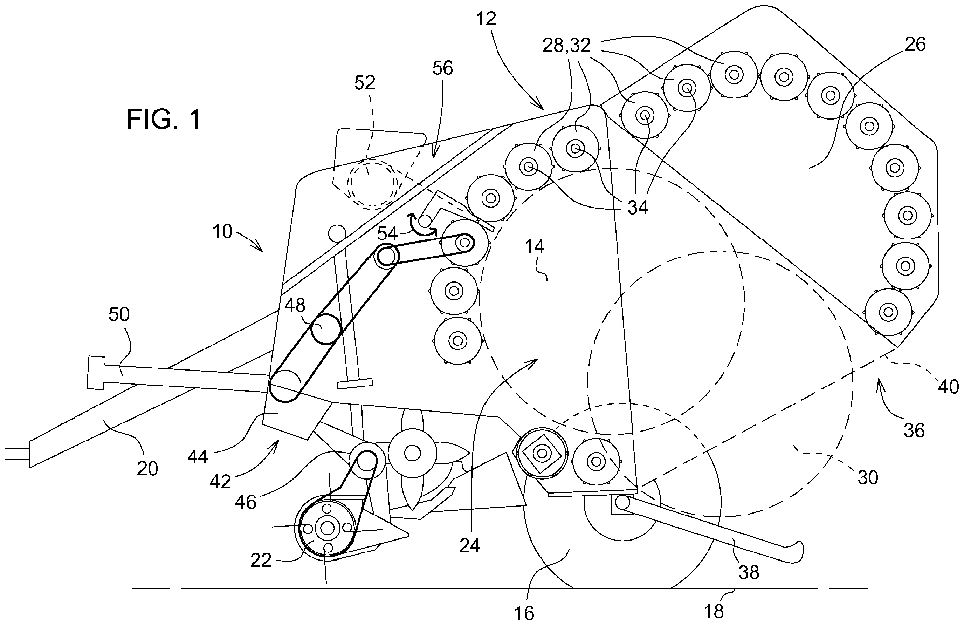

Figur 1 zeigt eine schematische Darstellung eines ersten Ausführungsbeispiels der erfindungsgemässen landwirtschaftlichen Rundballenpresse. Die in Figur 1 schematisch dargestellte Rundballenpresse 10 umfasst ein Gehäuse 12 mit einem Gehäuseteil 14, der sich mittels Rädern 16 auf einem Boden 18 abstützt und mittels einer Deichsel 20 an ein nicht gezeigtes Zugfahrzeug, z. B. einen Traktor oder Ackerschlepper, anschließbar ist.

An der in Vorwärtsfahrtrichtung vorderen unteren Seite des Gehäuseteils 14 befindet sich in bekannter Weise eine Aufnahme- und Zuführeinrichtung 22 für Erntegut.

Das Gehäuse 12 weist weiter eine am Gehäuseteil 14 um eine Lagerachse schwenkbar gelagerte Auswurfklappe 26 auf, wobei sich im Speziellen am rückwärtigen oberen Eckbereich des Gehäuseteils 14 ein Lager für die schwenkbar gelagerte Auswurfklappe 26 befindet. Auf dem Gehäuseteil 14 und der Auswurfklappe 26 sind antreibbare Pressmittel 28 verteilt, die eine Ballenpresskammer 24 umfangsseitig begrenzen und durch welche eine rotationserzeugende oder rotationserhaltende Eingriffswirkung auf einen in der Ballenpresskammer 24 befindlichen Rundballen 30 erzeugbar ist. Somit bildet das Gehäuseteil 14 einen vorderen Teil der Ballenpresskammer 24 und die Auswurfklappe 26 einen hinteren Teil der Ballenpresskammer 24 aus.

Die Rundballenpresse 10, mit größenunveränderlicher Ballenpresskammer 24 ausgebildet, enthält eine Vielzahl zueinander parallel verlaufender Presselemente 28 zum Pressen von Erntegut in Form von Pressrollen 32 (exemplarisch wurden hier nur einige wenige Pressrollen 32 mit dem Bezugszeichen "32" versehen), deren Rotationsachsen 34 bei geschlossener Auswurfklappe 26 auf einem Kreisbogen gelegen sind, und von denen wenigstens einige angetrieben sind.

Die Auswurfklappe 26 kann mittels einer Stelleinrichtung (nicht gezeigt), beispielsweise mittels einem oder mehreren Stellmotoren, betätigt werden (geöffnet und geschlossen werden). Dabei ist die Auswurfklappe 26 mittels der Stelleinrichtung derart schwenkbar, dass beim Öffnen der Auswurfklappe 26 eine Auswurföffnung 36 zwischen dem Gehäuseteil 14 und der Auswurfklappe 26 ausbildbar ist. Durch die Auswurföffnung 36 kann ein von der Rundballenpresse 10 gepresster Ballen 28 abgesetzt bzw. entladen oder ausgeworfen werden. Der Rundballen 30 bewegt sich dabei in Richtung der Auswurföffnung 36 und rollt auf eine Abroll- oder Entladerampe 38, über welche der Rundballen 30 auf den Boden 18 geleitet werden kann. Darüber hinaus ist die Auswurfklappe 26 mittels der Stelleinrichtung derart schwenkbar, dass eine Abmessung 40 der Auswurföffnung, bevorzugt ein Durchmesser der Auswurföffnung und/oder ein Abstand zwischen dem Gehäuseteil 14 und der Auswurfklappe 26, veränderbar ist.

Die Rundballenpresse 10 verfügt ferner über eine Antriebsanordnung 42 mit einer Getriebeanordnung 44, einem ersten Antriebsstrang 46 und einem zweiten Antriebsstrang 48. Eine Antriebswelle 50 ist mit einer Zapfwelle (nicht gezeigt) des Zugfahrzeugs oder Schleppers verbindbar und dient als Antrieb für die Antriebsanordnung 36. Der erste Antriebsstrang 46 steht über einen ersten Abtrieb (nicht gezeigt) und der zweite Antriebsstrang 48 über einen zweiten Abtrieb (nicht gezeigt) der Getriebeanordnung 44 mit dieser in Antriebsverbindung. Der erste Antriebsstrang 46 treibt die Aufnahme- und Zuführeinrichtung 22 an, wobei der zweite Antriebsstrang 48 zum Antreiben der Pressmittel 28 bzw. der Pressrollen 32 vorgesehen ist. Die Antriebsstränge 46, 48 umfassen alle Antriebskomponenten, die in bekannter Weise in Rundballenpressen zum Antreiben der Aufnahme- und Zuführeinrichtung 22 bzw. zum Antreiben der Pressmittel 28 angeordnet sind und antriebsseitig mit dem ersten Abtrieb bzw. dem zweiten Abtrieb der Getriebeanordnung 44 verbunden sind.

Ferner umfasst die Rundballenpresse 10 eine Wickelvorrichtung 56, die mit einer Netz- oder Folienrolle 52 als Wickelmaterial bestückt ist. Die Wickelvorrichtung 56 umfasst eine Wickelmaterialzuführung 54, die das Wickelmaterial von der Netz- bzw. Folienrolle 52 in den Ballenpresskammer 24 führt. An Stelle einer Wickelvorrichtung 56 kann auch eine Bindevorrichtung (nicht gezeigt) mit Bindegarn, ebenfalls in bekannter Weise, zum Einsatz kommen.

Während eines Pressvorgangs werden der erste und der zweite Antriebsstrang 46, 48 über die Getriebeanordnung 44 bzw. über den Antrieb und den Abtrieben parallel angetrieben, so dass die Aufnahme- und Zuführeinrichtung 22 als auch die Pressmittel 28, 32 zeitgleich mit konstantem Drehzahlverhältnis zueinander in Betrieb gehalten werden. Nachdem die Erntegutaufnahme und Bildung des Rundballens 30 durch die Pressrollen 32, abgeschlossen ist, wird die Fahrt über den Boden 18 unterbrochen, da die Rundballenpresse 10 mit dem Rundballen 30 gefüllt ist und kein weiteres Erntegut mehr in die Ballenpresskammer 24 aufgenommen werden soll bzw. kann. Zu dieser Zeit wird auch die Wickelvorrichtung 56 aktiviert, die einen Wickel- bzw. Bindevorgang eingeleitet. Dabei wird durch eine anhaltende Drehung des sich in der Ballenpresskammer 24 befindlichen Rundballens das Wickelmaterial um den Rundballen 30 gewickelt. Nachdem ein Wickelvorgang abgeschlossen ist geht der Pressvorgang in den Entladevorgang über und der Rundballen wird während durch Öffnen der Auslassklappe 26 über die Auswurföffnung und die Entladerampe 38 auf den Boden 18 abgelassen.

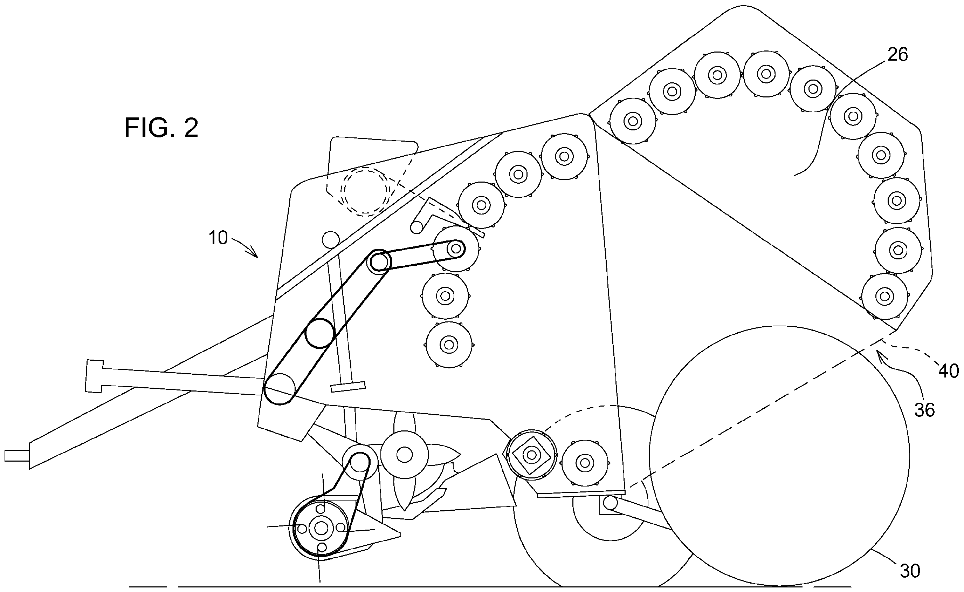

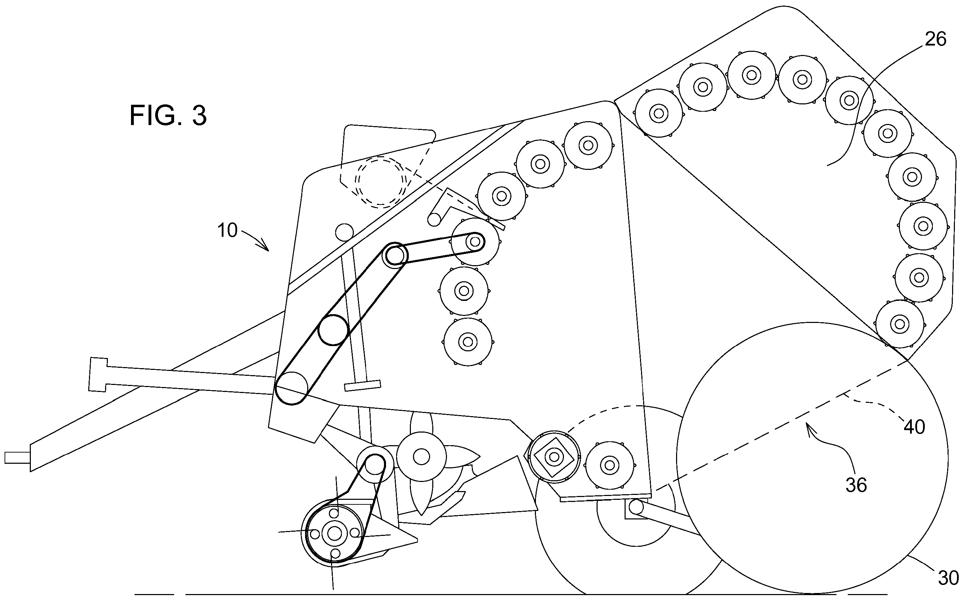

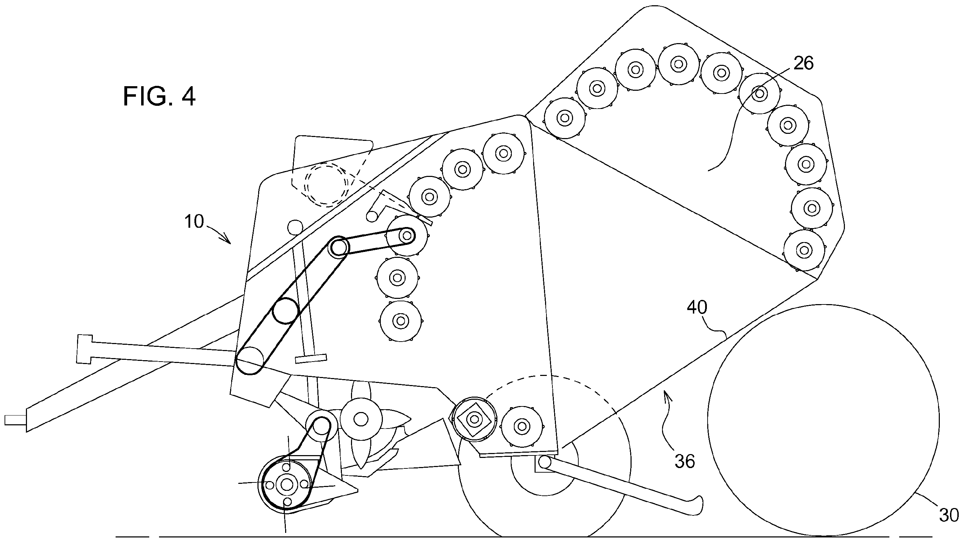

Ein wesentliches Problem beim Entladevorgang ist das sichere Entladen des Rundballens, insbesondere in unebenem und/oder hügeligem Gelände, da der Rundballen in diesem Gelände entweder weiterrollen und/oder sogar umfallen und somit nicht am gewünschten Lagerort entladen werden. Aus diesem Grund muss der Bediener in unebenem und/oder hügeligem Gelände zunächst einen geeigneten Lagerort suchen, um den Rundballen sicher zu entladen, was sehr zeitaufwändig und mit erheblichem Aufwand verbunden ist. Um den Entladevorgang der Rundballenpresse 10 in unebenem und/oder hügeligem Gelände gegenüber herkömmlichen Rundballenpressen 10 dennoch zu ermöglichen, ist es bei der hier ausgebildeten Rundballenpresse 10 möglich, die Auswurfklappe 26 während eines Entladevorgangs des fertig gepressten Rundballen 30 mittels der Stelleinrichtung derart einstellbar, dass die geöffnete Auswurfklappe 26 von einer Entladeposition (siehe Figur 2), in welcher der fertig gepresste Rundballen 30 durch die Auswurföffnung 36 entladen wird, in eine Halteposition beweglich ist, in welcher der entladene Rundballen 30 mittels der geöffneten Auswurfklappe 26 gehalten wird (siehe Figur 3). Im Weiteren ist die Auswurfklappe 26 während des Entladevorgangs des fertig gepressten Rundballen 30 mittels der Stelleinrichtung derart einstellbar, dass die geöffnete Auswurfklappe 26 von der Halteposition in eine Entlastungsposition beweglich ist, in welcher der gehaltene Rundballen 30 von der geöffneten Auswurfklappe 26 losgelassen wird (siehe Figuren 3 und 4). Vorteilhafterweise kann der Rundballen 30 somit auf einfache Art und Weise gehalten und sicher am gewünschten Lagerort abgeladen werden. Ein unbeabsichtigtes Rollen des Rundballens 30 in unebenem und/oder hügeligem Gelände kann also verhindert werden und der Rundballen 30 kann auf einfache Art in unebenem und/oder hügeligem Gelände ausgeladen werden. Mit anderen Worten, die Standzeit der Rundballenpresse 10 wird deutlich verkürzt, und der Entladevorgang wird weniger aufwändig ausgestaltet. Es können so mehr Rundballen 30 pro Zeiteinheit eingefahren werden.

Figur 2 zeigt eine schematische Seitenansicht des ersten Ausführungsbeispiels der erfindungsgemässen landwirtschaftlichen Rundballenpresse 10 in einer Entladeposition. Figur 3 zeigt eine schematische Seitenansicht des ersten Ausführungsbeispiels der erfindungsgemässen landwirtschaftlichen Rundballenpresse 10 in einer Halteposition. Figur 4 zeigt eine schematische Seitenansicht des ersten Ausführungsbeispiels der erfindungsgemässen landwirtschaftlichen Rundballenpresse 10 in einer Entlastungsposition. Die in den Figuren 2, 3 und 4 gezeigte Rundballenpresse 10 entspricht im Wesentlichen der in Figur 1 gezeigten Rundballenpresse 10, sodass im Folgenden lediglich auf die Unterschiede eingegangen wird. Die Auswurfklappe 26 der Rundballenpresse 10 ist mittels der Stelleinrichtung derart einstellbar, dass die Abmessung 40 der Auswurföffnung 36 in der Halteposition (siehe Figur 3) kleiner ist als in der Entladeposition (siehe Figur 2) und die Abmessung 40 der Auswurföffnung 36 in der Entlastungsposition (siehe Figur 4) grösser ist als die Abmessung 40 in der Halteposition (siehe Figur 3). Mit anderen Worten, die Auswurfklappe 26 ist während des Entladevorgangs des fertig gepressten Rundballen 30 mittels der Stelleinrichtung derart einstellbar, dass bei geöffneter Auswurfklappe die Abmessung der Auswurföffnung zum Entladen eines fertig gepressten Rundballens zunächst vergrößert wird, die Abmessung anschliessend zum Halten des entladenen Rundballens mit der geöffneten Auswurfklappe verkleinert wird, und die Abmessung danach zum Loslassen des Rundballens wieder vergrössert wird. Die erfindungsgemässe Rundballenpresse ist somit konstruktiv und verfahrenstechnisch derart einfach ausgestaltet, dass der Entladevorgang in einem unebenen und/oder hügeligen Gelände ausführbar ist und ein weniger zeitaufwändiges Entladen des Rundballens möglich ist.

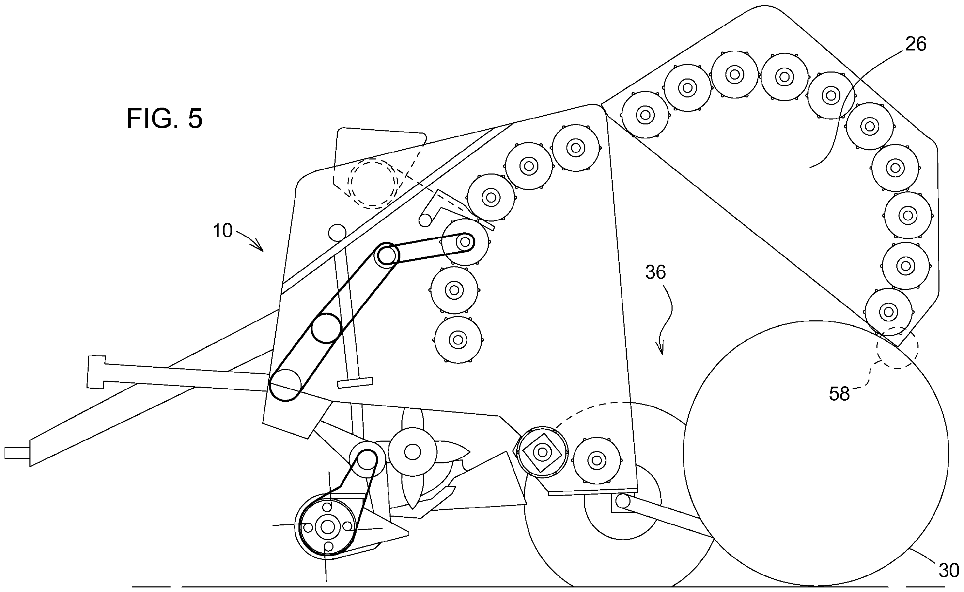

Figur 5 zeigt eine schematische Seitenansicht eines zweiten Ausführungsbeispiels der erfindungsgemässen landwirtschaftlichen Rundballenpresse 10. Die in Figur 5 gezeigte Rundballenpresse 10 entspricht im Wesentlichen der in den Figuren 1 bis 4 gezeigten Rundballenpresse 10, sodass im Folgenden lediglich auf die Unterschiede eingegangen wird. Die Auswurfklappe 26 umfasst unmittelbar an der Auswurföffnung 36 eine frei drehbar gelagerte Halterolle 58 zum Halten des Rundballens 30, wobei die frei drehbar gelagerte Halterolle 58 zum Halten des Rundballens auch am Gehäuseteil 14 unmittelbar an der Auswurföffnung 36 angeordnet sein kann.

## Patentansprüche

1. Landwirtschaftliche Rundballenpresse mit einem Gehäuse (12), das einen Gehäuseteil (14) und eine an diesem Gehäuseteil (14) um eine Lagerachse schwenkbar gelagerte Auswurfklappe (26) aufweist, und auf dem Gehäuseteil (14) und der Auswurfklappe (26) verteilte antreibbare Pressmittel (28,32), die eine Ballenpresskammer (24) umfangsseitig begrenzen und durch welche eine rotationserzeugende oder rotationserhaltende Eingriffswirkung auf einen in der Ballenpresskammer (24) befindlichen Rundballen (30) erzeugbar ist,
wobei die Auswurfklappe (26) mittels einer Stelleinrichtung derart schwenkbar ist, dass beim Öffnen der Auswurfklappe (26) eine Auswurföffnung (36) zwischen dem Gehäuseteil (14) und der Auswurfklappe (26) ausbildbar ist und eine Abmessung (40) der Auswurföffnung (36) veränderbar ist,
**dadurch gekennzeichnet, dass**
die Stelleinrichtung so konfiguriert ist, dass die Auswurfklappe (26) während eines Entladevorgangs des fertig gepressten Rundballen (30) mittels der Stelleinrichtung derart eingestellt wird, dass die geöffnete Auswurfklappe (26) von einer Entladeposition, in welcher der fertig gepresste Rundballen (30) durch die Auswurföffnung (36) entladen wird, in eine Halteposition bewegt wird,
in welcher der entladene Rundballen (30) mittels der geöffneten Auswurfklappe (26) gehalten wird, und von der Halteposition in eine Entlastungsposition bewegt wird,
in welcher der gehaltene Rundballen (30) von der geöffneten Auswurfklappe (26) losgelassen wird, wobei die Abmessung (40) der Auswurföffnung (36) in der Halteposition kleiner ist als in der Entladeposition und die Abmessung (40) der Auswurföffnung (36) in der Entlastungsposition grösser ist als die Abmessung (40) in der Halteposition.

2. Landwirtschaftliche Rundballenpresse nach Anspruch 1, **dadurch gekennzeichnet, dass** die Auswurfklappe (26) und/oder das Gehäuseteil (14) unmittelbar an der Auswurföffnung (36) eine frei drehbar gelagerte Halterolle (58) zum Halten des Rundballens (30) umfassen.

3. Landwirtschaftliche Rundballenpresse nach einem der Ansprüche 1 bis 2, **dadurch gekennzeichnet, dass** die Rundballenpresse (10) einen Neigungssensor zur Messung einer Neigung der Rundballenpresse und/oder ein Kommunikationsmodul zum Empfang einer Standortinformation der Rundballenpresse aufweist.

4. Landwirtschaftliche Rundballenpresse nach einem der Ansprüche 1 bis 3, **dadurch gekennzeichnet, dass** die Stelleinrichtung in Abhängigkeit von der Neigung und/oder der Standortinformation der Rundballenpresse betreibbar ist.

5. Verfahren zum Betrieb einer landwirtschaftliche Rundballenpresse (10) mit einem Gehäuse (12), wobei das Gehäuse (12) einen Gehäuseteil (14) und eine an diesem Gehäuseteil (14) um eine Lagerachse schwenkbar gelagerte Auswurfklappe (26) aufweist, und auf dem Gehäuseteil (14) und der Auswurfklappe (26) verteilte angetriebene Pressmittel (28, 32), die eine Ballenpresskammer (24) umfangsseitig begrenzen und durch welche eine rotationserzeugende oder rotationserhaltende Eingriffswirkung auf einen in der Ballenpresskammer (24) befindlichen Rundballen (30) erzeugt wird, wobei die Auswurfklappe (26) mittels einer Stelleinrichtung derart geschwenkt wird, dass beim Öffnen der Auswurfklappe (26) eine Auswurföffnung (36) zwischen dem Gehäuseteil (14) und der Auswurfklappe (26) ausgebildet wird und eine Abmessung (40) der Auswurföffnung (36) verändert wird,
**dadurch gekennzeichnet, dass**
die Auswurfklappe (26) während eines Entladevorgangs des fertig gepressten Rundballens (30) mittels der Stelleinrichtung derart eingestellt wird, dass die geöffnete Auswurfklappe (26) von einer Entladeposition, in welcher der fertig gepresste Rundballen (30) durch die Auswurföffnung (36) entladen wird, in eine Halteposition bewegt wird, in welcher der entladene Rundballen (30) mittels der geöffneten Auswurfklappe (26) gehalten wird, und von der Halteposition in eine Entlastungsposition bewegt wird, in welcher der gehaltene Rundballen (30) von der geöffneten Auswurfklappe (26) losgelassen wird, wobei die Abmessung (40) der Auswurföffnung (36) in der Halteposition kleiner ist als in der Entladeposition und die Abmessung (40) der Auswurföffnung (36) in der Entlastungsposition grösser ist als die Abmessung (40) in der Halteposition.

## Claims

1. Agricultural round baler having a housing (12) which has a housing part (14) and an ejection flap (26) mounted on this housing part (14) so as to be pivotable about a bearing axis, and drivable pressing means (28, 32) which are distributed on the housing part (14) and the ejection flap (26), peripherally delimit a bale pressing chamber (24) and are able to generate rotation-generating or rotation-maintaining engagement with a round bale (30) located in the bale pressing chamber (24),
wherein the ejection flap (26) is pivotable by means of a setting device such that when the ejection flap (26) is opened, an ejection opening (36) is able to be formed between the housing part (14) and the ejection flap (26) and dimensions (40) of the ejection opening (36) are able to be altered,
**characterized in that**
the setting device is configured such that, during an unloading process of the fully pressed round bale (30), the ejection flap (26) is set by means of the setting device such that the open ejection flap (26) is moved from an unloading position, in which the fully pressed round bale (30) is unloaded through the ejection opening (36), into a retaining position, in which the unloaded round bale (30) is retained by means of the open ejection flap (26), and is moved from the retaining position into a discharging position, in which the retained round bale (30) is released from the open ejection flap (26), wherein the dimensions (40) of the ejection opening (36) in the retaining position are smaller than in the unloading position and the dimensions (40) of the ejection opening (36) in the discharging position are greater than the dimensions (40) in the retaining position.

2. Agricultural round baler according to Claim 1, **characterized in that** the ejection flap (26) and/or the housing part (14) comprise a freely rotatably mounted retaining roller (58), directly at the ejection opening (36), for retaining the round bale (30) .

3. Agricultural round baler according to either of Claims 1 and 2, **characterized in that** the round baler (10) has an inclination sensor for measuring an inclination of the round baler and/or a communication module for receiving location information about the round baler.

4. Agricultural round baler according to one of Claims 1 to 3, **characterized in that** the setting device is operable depending on the inclination of and/or the location information about the round baler.

5. Method for operating an agricultural round baler (10) having a housing (12), wherein the housing (12) has a housing part (14) and an ejection flap (26) which is mounted on this housing part (14) so as to be pivotable about a bearing axis, and driven pressing means (28, 32) which are distributed on the housing part (14) and the ejection flap (26), peripherally delimit a bale pressing chamber (24) and are able to generate rotation-generating or rotation-maintaining engagement with a round bale (30) located in the bale pressing chamber (24), wherein the ejection flap (26) is pivoted by means of a setting device such that when the ejection flap (26) is opened, an ejection opening (36) is formed between the housing part (14) and the ejection flap (26) and dimensions (40) of the ejection opening (36) are altered
**characterized in that**,
during an unloading process of the fully pressed round bale (30), the ejection flap (26) is set by means of the setting device such that the open ejection flap (26) is moved from an unloading position, in which the fully pressed round bale (30) is unloaded through the ejection opening (36), into a retaining position, in which the unloaded round bale (30) is retained by means of the open ejection flap (26), and is moved from the retaining position into a discharging position, in which the retained round bale (30) is released from the open ejection flap (26), wherein the dimensions (40) of the ejection opening (36) in the retaining position are smaller than in the unloading position and the dimensions (40) of the ejection opening (36) in the discharging position are greater than the dimensions (40) in the retaining position.

## Revendications

1. Presse à balles rondes agricole comportant un carter (12) qui présente une partie de carter (14) et une trappe d'éjection (26) montée pivotante autour d'un axe de palier sur cette partie de carter (14), et des moyens de pressage (28, 32) pouvant être entraînés répartis sur la partie de carter (14) et la trappe d'éjection (26), lesquels moyens de pressage délimitent du côté périphérique une chambre de pressage de balle (24) et par le biais desquels une action d'entrée en prise provoquant une rotation ou maintenant une rotation sur une balle ronde (30) se trouvant dans la chambre de pressage de balle (24) peut être produite,
la trappe d'éjection (26) pouvant être pivotée au moyen d'un dispositif de réglage, de telle sorte que, lors de l'ouverture de la trappe d'éjection (26), une ouverture d'éjection (36) entre la partie de carter (14) et la trappe d'éjection (26) peut être formée et une dimension (40) de l'ouverture d'éjection (36) peut être modifiée,
**caractérisée en ce que**
le dispositif de réglage est configuré de telle sorte que la trappe d'éjection (26), pendant une opération de déchargement de la balle ronde (30) complètement pressée, est réglée au moyen du dispositif de réglage, de telle sorte que la trappe d'éjection (26) ouverte est déplacée d'une position de déchargement, dans laquelle la balle ronde (30) complètement pressée est déchargée à travers l'ouverture d'éjection (36), à une position de retenue, dans laquelle la balle ronde (30) déchargée est retenue au moyen de la trappe d'éjection (26) ouverte, et est déplacée de la position de retenue à une position de déchargement, dans laquelle la balle ronde (30) retenue est lâchée à partir de la trappe d'éjection (26) ouverte, la dimension (40) de l'ouverture d'éjection (36) dans la position de retenue étant inférieure à celle dans la position de déchargement et la dimension (40) de l'ouverture d'éjection (36) dans la position de déchargement étant supérieure à la dimension (40) dans la position de retenue.

2. Presse à balles rondes agricole selon la revendication 1, **caractérisée en ce que** la trappe d'éjection (26) et/ou la partie de carter (14) comprennent directement au niveau de l'ouverture d'éjection (36) un rouleau de retenue (58) monté de manière librement rotative servant à retenir la balle ronde (30).

3. Presse à balles rondes agricole selon l'une des revendications 1 et 2, **caractérisée en ce que** la presse à balles rondes (10) présente un capteur d'inclinaison servant à la mesure d'une inclinaison de la presse à balles rondes et/ou un module de communication servant à la réception d'une information d'emplacement de la presse à balles rondes.

4. Presse à balles rondes agricole selon l'une des revendications 1 à 3, **caractérisée en ce que** le dispositif de réglage peut fonctionner en fonction de l'inclinaison et/ou de l'information d'emplacement de la presse à balles rondes.

5. Procédé de fonctionnement d'une presse à balles rondes agricole (10) comportant un carter (12), le carter (12) présentant une partie de carter (14) et une trappe d'éjection (26) montée pivotante autour d'un axe de palier sur cette partie de carter (14), et des moyens de pressage (28, 32) pouvant être entraînés répartis sur la partie de carter (14) et la trappe d'éjection (26), lesquels moyens de pressage délimitent du côté périphérique une chambre de pressage de balle (24) et par le biais desquels une action d'entrée en prise provoquant une rotation ou maintenant une rotation sur une balle ronde (30) se trouvant dans la chambre de pressage de balle (24) est produite, la trappe d'éjection (26) étant pivotée au moyen d'un dispositif de réglage, de telle sorte que, lors de l'ouverture de la trappe d'éjection (26), une ouverture d'éjection (36) entre la partie de carter (14) et la trappe d'éjection (26) est formée et une dimension (40) de l'ouverture d'éjection (36) est modifiée,
**caractérisé en ce que**
la trappe d'éjection (26), pendant une opération de déchargement de la balle ronde (30) complètement pressée, est réglée au moyen du dispositif de réglage, de telle sorte que la trappe d'éjection (26) ouverte est déplacée d'une position de déchargement, dans laquelle la balle ronde (30) complètement pressée est déchargée à travers l'ouverture d'éjection (36), à une position de retenue, dans laquelle la balle ronde (30) déchargée est retenue au moyen de la trappe d'éjection (26) ouverte, et est déplacée de la position de retenue à une position de déchargement, dans laquelle la balle ronde (30) retenue est lâchée à partir de la trappe d'éjection (26) ouverte, la dimension (40) de l'ouverture d'éjection (36) dans la position de retenue étant inférieure à celle dans la position de déchargement et la dimension (40) de l'ouverture d'éjection (36) dans la position de déchargement étant supérieure à la dimension (40) dans la position de retenue.
